# FASCICULE DE BREVET EUROPEEN

(11) **EP 3 990 846 B1**
(45) Date de publication et mention de la délivrance du brevet: **22.11.2023**
(21) Numéro de dépôt: 20731846.0
(22) Date de dépôt: 08.06.2020
(51) Int. Cl.: F25J 1/00, F25J 1/02

(54) **INSTALLATION ET PROCÉDÉ DE LIQUÉFACTION DE GAZ**
ANLAGE UND VERFAHREN ZUR VERFLÜSSIGUNG VON GAS
PLANT AND METHOD FOR LIQUEFYING GAS

(30) Priorité: 27.06.2019 FR 1907021
(43) Date de publication de la demande: 04.05.2022
(73) Titulaire: L'Air Liquide, société anonyme pour l'Étude et l'Exploitation des procédés Georges Claude, 75007 Paris (FR)
(72) Inventeur: BARJHOUX, Pierre, 38360 SASSENAGE (FR); DURAND, Fabien, 38360 SASSENAGE (FR); DELCAYRE, Franck, 38360 SASSENAGE (FR)
(86) Numéro de dépôt international: PCT/EP2020/065778
(87) Numéro de publication internationale: WO 2020/259990

(56) Documents cités:
- JP-A- 2016 183 827
- US-A1- 2014 053 598
- US-A1- 2019 041 124
- PETER C VANDER AREND: "Large-scale liquid hydrogen production", CHEMICAL ENGINEERING PROGRESS,, vol. 57, no. 10, 1 octobre 1961 (1961-10-01), pages 62-67, XP001350777,

## Description

L'invention concerne une installation et un procédé de liquéfaction de gaz.

L'invention concerne plus particulièrement une installation de liquéfaction d'un flux de gaz tel que de l'hydrogène, l'installation comprenant un circuit de refroidissement muni d'une extrémité amont destinée à être reliée à une source de gaz sous pression à liquéfier et d'une extrémité aval destinée à être reliée à un organe utilisateur du gaz liquéfié, l'installation comprenant, entre les extrémité amont et aval, un ensemble d'organes destinés à liquéfier ledit gaz et comprenant au moins un échangeur de refroidissement du gaz, et au moins une turbine de détente montée sur un axe tournant sustenté par au moins un palier de type statique à gaz, le circuit de refroidissement comprenant une conduite d'injection de gaz sous pression ayant une extrémité amont destinées à recevoir du gaz sous pression fourni par la source et une extrémité aval reliée au palier pour assurer la sustentation de l'axe tournant, l'installation comprenant une conduite de récupération du gaz ayant été utilisé dans le palier, la conduite de récupération comprenant une extrémité amont reliée au palier et une extrémité aval, l'extrémité aval de la conduite de récupération du gaz étant reliée au circuit de refroidissement entre ses extrémités amont et aval pour y recycler au moins une partie du gaz ayant servi à la sustentation de l'axe tournant du palier en vue de sa liquéfaction.

La liquéfaction des gaz implique classiquement un ou plusieurs étages de détente du gaz, profitant de l'énergie de pression fournie à un gaz de travail, lequel gaz est classiquement comprimé à température ambiante.

Ces étages de détente sont classiquement réalisés par des turbines centripètes qui extraient de la chaleur au fluide de travail (hélium, hydrogène, néon, azote, oxygène... ou mélanges de ces derniers) pour le transférer au fluide à liquéfier. Plusieurs technologies sont utilisées dans les liquéfacteurs de gaz pour sustenter un arbre tournant à l'extrémité duquel est accroché une turbine.

Ainsi, les paliers à huile à effet coin d'huile utilisent un circuit fermé d'huile synthétique qui injecte continuellement ce fluide au niveau de l'arbre pour le supporter (sustenter). Une pompe de relevage est généralement installée pour compenser les pertes de charge liées à l'injection du fluide dans des buses spécifiques.

Une autre solution connue utilise des paliers magnétiques (actifs ou passifs). Selon cette technologie, des aimants positionnés sur le rotor permettent de maintenir en sustentation magnétique ce dernier grâce à des aimants installés en regard de ceux-ci sur la partie fixe de la turbomachine.

La technologie des paliers gaz dynamique utilise quant à elle un coussin de gaz formé par le mise en rotation de la turbine. L'effet de réaction dans le volume fermé de gaz associé à une géométrie spécifique des parties fixes de la turbomachine provoque une sustentation de l'arbre tournant.

La technologie des paliers à gaz statique utilise une injection continue de gaz de travail sur l'arbre de façon à permettre de le sustenter en continu. Cette solution est très robuste et peu sujette aux pollutions du gaz détendu. Cependant, cette solution consomme du gaz de travail pour ce besoin. Cette technologie entraîne en outre une consommation électrique à la station de compression plus importante.

Une manière de valoriser ces débits de gaz utilisés dans les paliers consiste à comprimer ce débit de gaz ayant servi dans le palier. Ce gaz est par exemple comprimé dans le compresseur de cycle principal ou dans un compresseur parallèle de l'installation se positionnant aux niveaux de pression adéquates. Toutefois, cette méthode induit une surconsommation d'énergie et un surcoût d'investissement pour ne pas perdre ce produit en continu. Une autre solution consiste à comprimer ce gaz dans des bouteilles ou des cylindres haute pression pour le valoriser (vente à l'état gazeux pour un marché additionnel).

US 2014/053598 A1 divulgue un appareil selon la préambule de la revendication 1 et un procédé selon la préambule de la revendication 8.

Ces solutions sont cependant imparfaites et peu satisfaisantes. Un but de la présente invention est de pallier tout ou partie des inconvénients de l'art antérieur relevés ci-dessus. A cette fin, l'installation selon l'invention, par ailleurs conforme à la définition générique qu'en donne le préambule ci-dessus, est essentiellement caractérisée en ce que, la conduite de récupération comprend une extrémité aval raccordée au niveau de la sortie de la au moins une turbine de détente,.

Ceci permet une valorisation innovante des gaz de palier(s) dans le cas d'une turbine sustentée par une technologie de palier gaz statique, le gaz de palier étant identique au fluide à liquéfier. Par ailleurs, des modes de réalisation de l'invention peuvent comporter l'une ou plusieurs des caractéristiques suivantes :
- la conduite de récupération comprend au moins une vanne de régulation du flux de gaz, notamment une vanne de détente,
- la conduite de récupération comprend une portion en échange thermique avec au moins un échangeur de chaleur de refroidissement,
- entre ses extrémités amont et aval la conduite de récupération est en échange thermique avec le au moins un échangeur de refroidissement du gaz du circuit de refroidissement,
- la conduite de récupération est en échange thermique avec le ou les échangeurs de refroidissement du gaz du circuit de refroidissement via un ou des passages dans le ou les échangeurs qui sont distincts des passages prévus pour le circuit (2) de refroidissement, c'est-à-dire que le gaz du circuit de refroidissement et le gaz circulant dans la conduite de récupération sont refroidis de façon parallèle et séparément avant d'être mélangé en aval,
- la au moins une turbine de détente est montée sur une première extrémité de l'axe tournant dont l'autre extrémité de l'axe tournant portant un compresseur situé dans un circuit en boucle d'un gaz de travail, ledit circuit comprenant une portion en échange thermique avec un échangeur de refroidissement pour refroidir le gaz comprimé par le compresseur,
- l'extrémité aval de la conduite d'injection comprend au moins une buse d'injection du gaz dans le palier configurée pour assurer une baisse de pression contrôlée dudit gaz dans le palier et maintenir une pression dudit gaz en sortie du palier au-dessus d'un seuil déterminé.
- L'invention concerne également un procédé de liquéfaction d'un flux de gaz tel que de l'hydrogène, dans une installation de liquéfaction comprenant un circuit de refroidissement muni d'une extrémité reliée à une source de gaz sous pression à liquéfier et d'une extrémité aval destinée reliée à un organe utilisateur du gaz liquéfié, l'installation comprenant, entre les extrémité amont et aval, un ensemble d'organes destinés à liquéfier ledit gaz et comprenant au moins un échangeur de refroidissement du gaz, et au moins une turbine de détente montée sur un axe tournant sustenté par au moins un palier statique à gaz, le circuit de l'installation comprenant une conduite d'injection de gaz sous pression ayant une extrémité amont destinées à recevoir du gaz sous pression fourni par la source et une extrémité aval reliée au palier statique à gaz pour assurer la sustentation de l'axe tournant, l'installation comprenant une conduite de récupération du gaz ayant été utilisé dans le palier comprenant une extrémité amont reliée au palier et une extrémité aval, le procédé comprenant une étape réinjection, dans le circuit de refroidissement, d'au moins une partie du gaz ayant servi à la sustentation de l'axe tournant du palier en vue de sa liquéfaction.

Selon d'autres particularités possibles :
- le gaz à liquéfier est au moins l'un parmi de l'hydrogène, de l'hélium, du néon, de l'azote, de l'oxygène, de l'argon,
- la pression du gaz à liquéfier provenant de la source au niveau de l'extrémité amont du circuit de refroidissement a une pression comprise entre 5 et 80 bar abs, la pression du gaz récupéré au niveau de l'extrémité amont de la conduite de récupération ayant une pression comprise entre 1,5 bar abs et 20 bar abs.

L'invention peut concerner également tout dispositif ou procédé alternatif comprenant toute combinaison des caractéristiques ci-dessus ou ci-dessous dans le cadre des revendications.

D'autres particularités et avantages apparaîtront à la lecture de la description ci-après, faite en référence aux figures dans lesquelles :
[Fig. 1] représente une vue schématique et partielle illustrant un premier exemple de structure et de fonctionnement d'une installation selon l'invention,
[Fig. 2] représente une vue schématique et partielle illustrant un exemple de structure et de fonctionnement d'une installation ne faisant pas partie de l'invention.

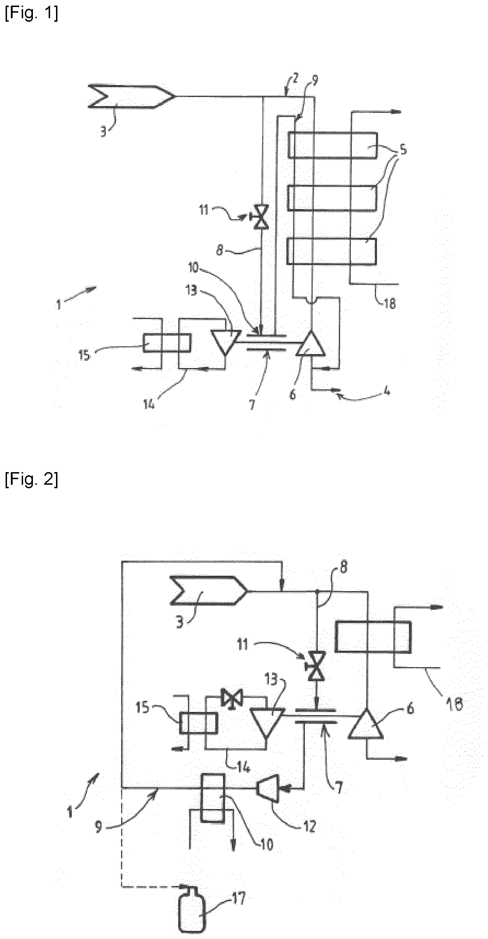

L'installation 1 de liquéfaction représentée à la [Fig. 1] et à la [Fig. 2] est une installation pour liquéfier par exemple un flux d'hydrogène (H2). Bien entendu l'invention n'est pas limitée à cette application mais pourrait concerner tout autre gaz ou mélange de gaz.

L'installation 1 comprenant un circuit 2 de refroidissement muni d'une extrémité amont reliée à une source 3 de gaz sous pression à liquéfier, par exemple de l'hydrogène à une pression comprise entre 5 et 80 bar abs.

Le circuit 2 de refroidissement comprend une extrémité 4 aval destinée à être reliée à un organe utilisateur/récupérateur du gaz liquéfié (stockage par exemple).

L'installation 1 comprend classiquement, entre les extrémité amont et aval 4, un ensemble d'organes 5, 6 destinés à liquéfier le gaz. Ces organes comprennent notamment au moins un échangeur 5 de refroidissement du gaz (notamment plusieurs échangeurs en série) et une ou plusieurs turbines 6 de détente.

Bien entendu, l'installation 1 de liquéfaction représentée est simplifiée mais peut comprendre tout autre organe appropriée (compresseur, vanne...).

La turbine 6 de détente illustrée est classiquement montée sur un axe tournant sustenté par au moins un palier 7 de type statique à gaz.

Le circuit 2 de refroidissement comprenant une conduite 8 d'injection de gaz sous pression ayant une extrémité amont reliée à l'extrémité amont du circuit 2 de refroidissement et recevant du gaz sous pression fourni par la source 3.

La conduite 8 d'injection possède une extrémité aval reliée au palier 7 pour assurer la sustentation de l'axe tournant. Par exemple, l'extrémité aval de la conduite 8 d'injection comprend au moins une buse 16 d'injection du gaz dans une entrée du palier 6.

L'installation 1 comprend au moins une conduite 9 de récupération du gaz ayant été utilisé dans le palier 7. Cette conduite 9 de récupération comprend une extrémité amont reliée au palier 7 (à une sortie du palier) et une extrémité aval. Selon une particularité avantageuse, l'extrémité aval de la conduite 9 de récupération du gaz est reliée au circuit 2 de refroidissement entre ses extrémités amont et aval pour y recycler au moins une partie du gaz ayant servi à la sustentation de l'axe tournant du palier 7 en vue de sa liquéfaction avec le reste du gaz fourni par la source 3.

La conduite 9 de récupération comprend de préférence au moins une vanne 11 de régulation du flux de gaz, notamment une vanne de détente.

La turbine 6 de détente est prévue pour extraire de l'énergie au gaz à liquéfier. Par exemple, cette turbine 6 peut être installée au bout froid du procédé et de façon à travailler de manière quasi isentropique dans la phase liquide

Dans l'exemple de la [Fig. 1], la conduite 9 de récupération comprend une extrémité aval raccordée au niveau de la sortie de la turbine 6 de détente. De plus, entre ses extrémités amont et aval, la conduite 9 de récupération est éventuellement en échange thermique avec les échangeurs 5 de refroidissement du gaz du circuit 2 de refroidissement. C'est-à-dire que le gaz qui a été utilisé dans le palier 7 est éventuellement refroidi et liquéfié avant d'être mélangé au gaz liquéfié obtenu dans le circuit 2 de refroidissement.

Comme illustré, la conduite 9 de récupération peut éventuellement être en échange thermique avec les échangeurs 5 de refroidissement du gaz du circuit 2 de refroidissement via un ou des passages supplémentaires dans le ou les échangeurs 5 qui sont distincts des passages principaux prévus pour le circuit 2 de refroidissement. C'est-à-dire que le gaz du circuit 2 de refroidissement et le gaz circulant dans la conduite 9 de récupération peuvent être refroidis dans les mêmes échangeurs 5 mais de façon parallèle et séparément avant d'être mélangé en aval. Ainsi, le gaz circulant dans la conduite de réparation peut être mis en circulation et refroidi dans des passages dédiés de tout ou partie des échangeurs 5 et à une pression moindre que le gaz du circuit de refroidissement, circulant dans d'autres passages de ces échangeurs. Bien entendu, la conduite 9 de récupération peut être raccordée en aval de la turbine de détente sans passer nécessairement par le ou les échangeurs 5 de refroidissement du gaz de circuit 2 de refroidissement. C'est-à-dire que, contrairement à ce qui est représenté à la [Fig. 1] la conduite 9 ne passe pas forcément par le ou les échangeurs 5.

Les passages principaux dans les échangeurs 5 de chaleur (échangeurs de type à plaques à ailettes en aluminium par exemple) peuvent être configurés pour échanger de la chaleur entre le fluide à liquéfier et un fluide 18 de refroidissement (pouvant être différent de la nature du gaz à liquéfier).

Le gaz sous pression prélevé pour sustenter l'axe du palier 7 peut être injecté dans le palier via une ou des buses réalisant une détente partielle de ce gaz sous pression.

Par exemple, si l'alimentation de la source est à un niveau de 30 bar absolus, les paliers 7 peuvent être dimensionnés pour que l'arbre soit sustenté et que le gaz détendu se retrouve à pression intermédiaire de l'ordre de quelques bar absolu (3 bar abs par exemple). Ceci ne nécessite aucun surcoût, seul le diamètre des buses d'injection peut être modifié pour atteindre cet objectif. Les buses d'injection de gaz dans les paliers 7 statiques peuvent être dimensionnées pour de ne pas consommer toute la pression disponible dans le gaz d'alimentation, c'est-à-dire pour qu'en sortie de palier 7 le gaz dispose encore de suffisamment de pression motrice pour vaincre les pertes de charge inhérentes reste du circuit (passage dans les échangeurs 5 de chaleur en aval principalement).

Cette solution évite une surconsommation de gaz en liquéfiant dans des circuits parallèles ce gaz des paliers puis en le mélangeant dans le circuit principal de liquéfaction en aval de la turbine 6.

Cette solution ne nécessite pas de machines de compression parallèles ou une augmentation de la capacité massique ou volumétrique de la station de compression existante.

Par exemple 5% du gaz fourni par la source 3 est prélevé et utilisé pour être injecté dans les paliers de la turbine 6 de détente à sustenter. Ces 5% se retrouvent au final dans le flux liquéfié.

Dans le mode de réalisation de la [Fig. 2] ne faisant pas partie de l'invention revendiquée, la conduite 9 de récupération comprend une extrémité aval raccordée au niveau de l'extrémité amont du circuit 2 de refroidissement. C'est-à-dire que le gaz utilisé dans les paliers 7 est recyclé en amont dans le circuit 2 de refroidissement. Dans ce cas, comme illustré, le gaz est de préférence comprimé dans un compresseur 12 (ou autre) et refroidi dans un échangeur 10 (ou autre) avant d'être réinjecté dans le circuit 2 de refroidissement, pour s'adapter aux conditions de pression et de température dans le circuit 2 qu'il rejoint. Comme illustré schématiquement en pointillés à la [Fig. 2], une partie de ce gaz récupéré, comprimé et refroidi, peut être utilisé pour remplir des stockages 17 de gaz sous pression. Comme schématisé, la turbine 6 de détente peut être montée sur une première extrémité d'un axe ou arbre tournant dont l'autre extrémité de l'axe porte un compresseur 13 de l'installation 1. Ce compresseur 13 peut être un compresseur de l'installation 1 comprimant de le gaz à liquéfier.

Le compresseur 13 peut être situé dans un circuit 14 en boucle (notamment fermée) d'un gaz de travail. Ce circuit 14 en boucle peut comprendre une portion en échange thermique avec un échangeur 15 de refroidissement pour refroidir le gaz comprimé par le compresseur 13. L'échangeur 15 de refroidissement peut être refroidi par un fluide froid.

## Revendications

1. Installation de liquéfaction d'un flux de gaz tel que de l'hydrogène, l'installation (1) comprenant un circuit (2) de refroidissement muni d'une extrémité amont destinée à être reliée à une source (3) de gaz sous pression à liquéfier et d'une extrémité (4) aval destinée à être reliée à un organe utilisateur du gaz liquéfié, l'installation (1) comprenant, entre les extrémité amont et aval (4), un ensemble d'organes (5, 6) destinés à liquéfier ledit gaz et comprenant au moins un échangeur (5) de refroidissement du gaz, et au moins une turbine (6) de détente montée sur un axe tournant sustenté par au moins un palier (7) de type statique à gaz, le circuit (2) de refroidissement comprenant une conduite (8) d'injection de gaz sous pression ayant une extrémité amont destinées à recevoir du gaz sous pression fourni par la source et une extrémité aval reliée au palier (7) pour assurer la sustentation de l'axe tournant, l'installation (1) comprenant une conduite (9) de récupération du gaz ayant été utilisé dans le palier (7), la conduite (9) de récupération comprenant une extrémité amont reliée au palier (7) et une extrémité aval, l'extrémité aval de la conduite (9) de récupération du gaz étant reliée au circuit (2) de refroidissement entre ses extrémités amont et aval pour y recycler au moins une partie du gaz ayant servi à la sustentation de l'axe tournant du palier (7) en vue de sa liquéfaction, **caractérisé en ce que** la conduite (9) de récupération comprend une extrémité aval raccordée au niveau de la sortie de la au moins une turbine (6) de détente.

2. Installation selon la revendication 1, **caractérisée en ce que** la conduite (9) de récupération comprend au moins une vanne (11) de régulation du flux de gaz, notamment une vanne de détente.

3. Installation selon la revendication 1 ou 2, **caractérisée en ce que** la conduite (9) de récupération comprend une portion en échange thermique avec au moins un échangeur (5, 10) de chaleur de refroidissement.

4. Installation selon l'une quelconque des revendications 1 à 3, **caractérisée en ce que**, entre ses extrémités amont et aval la conduite (9) de récupération est en échange thermique avec le au moins un échangeur (5) de refroidissement du gaz du circuit (2) de refroidissement.

5. Installation selon l'une quelconque des revendications 1 à 4, **caractérisée en ce que** la conduite (9) de récupération est en échange thermique avec le ou les échangeurs (5) de refroidissement du gaz du circuit (2) de refroidissement via un ou des passages dans le ou les échangeurs (5) qui sont distincts des passages prévus pour le circuit (2) de refroidissement, c'est-à-dire que le gaz du circuit (2) de refroidissement et le gaz circulant dans la conduite (9) de récupération sont refroidis de façon parallèle et séparément avant d'être mélangé en aval.

6. Installation selon l'une quelconque des revendications 1 à 5, **caractérisée en ce que** la au moins une turbine (6) de détente est montée sur une première extrémité de l'axe tournant dont l'autre extrémité de l'axe tournant portant un compresseur (13) situé dans un circuit (14) en boucle d'un gaz de travail, ledit circuit (14) comprenant une portion en échange thermique avec un échangeur (15) de refroidissement pour refroidir le gaz comprimé par le compresseur (13).

7. Installation selon l'une quelconque des revendications 1 à 6, **caractérisée en ce que** l'extrémité aval de la conduite (8) d'injection comprend au moins une buse (16) d'injection du gaz dans le palier configurée pour assurer une baisse de pression contrôlée dudit gaz dans le palier (7) et maintenir une pression dudit gaz en sortie du palier au-dessus d'un seuil déterminé.

8. Procédé de liquéfaction d'un flux de gaz tel que de l'hydrogène, dans une installation (1) de liquéfaction comprenant un circuit (2) de refroidissement muni d'une extrémité reliée à une source (3) de gaz sous pression à liquéfier et d'une extrémité (4) aval destinée reliée à un organe utilisateur du gaz liquéfié, l'installation (1) comprenant, entre les extrémité amont et aval (4), un ensemble d'organes (5, 6) destinés à liquéfier ledit gaz et comprenant au moins un échangeur (5) de refroidissement du gaz, et au moins une turbine (6) de détente montée sur un axe tournant sustenté par au moins un palier (7) statique à gaz, le circuit (2) de l'installation (1) comprenant une conduite (8) d'injection de gaz sous pression ayant une extrémité amont destinées à recevoir du gaz sous pression fourni par la source et une extrémité aval reliée au palier (7) statique à gaz pour assurer la sustentation de l'axe tournant, l'installation (1) comprenant une conduite (9) de récupération du gaz ayant été utilisé dans le palier (7) comprenant une extrémité amont reliée au palier (7) et une extrémité aval, le procédé comprenant une étape réinjection, dans le circuit (2) de refroidissement, d'au moins une partie du gaz ayant servi à la sustentation de l'axe tournant du palier (7) en vue de sa liquéfaction, **caractérisé en ce que** la conduite (9) de récupération comprend une extrémité aval raccordée au niveau de la sortie de la au moins une turbine (6) de détente.

9. Procédé selon la revendication 8, **caractérisé en ce que** le gaz à liquéfier est au moins l'un parmi de l'hydrogène, de l'hélium, du néon, de l'azote, de l'oxygène, de l'argon.

10. Procédé selon la revendication 8 ou 9, **caractérisé en ce que** la pression du gaz à liquéfier provenant de la source au niveau de l'extrémité amont du circuit (2) de refroidissement a une pression comprise entre 5 et 80 bar abs et **en ce que** la pression du gaz récupéré au niveau de l'extrémité amont de la conduite (9) de récupération a une pression comprise entre 1,5 bar abs et 20 bar abs.

## Patentansprüche

1. Anlage zur Verflüssigung eines Gasstroms wie Wasserstoff, wobei die Anlage (1) einen Kühlkreis (2) umfasst, der mit einem stromaufwärtigen Ende versehen ist, das dazu bestimmt ist, mit einer Quelle (3) für zu verflüssigendes Druckgas verbunden zu werden, und mit einem stromabwärtigen Ende (4), das dazu bestimmt ist, mit einem verflüssigtes Gas verbrauchenden Organ verbunden zu werden, wobei die Anlage (1) zwischen den stromaufwärtigen und stromabwärtigen (4) Enden eine Anordnung von Organen (5, 6) umfasst, die dazu bestimmt sind, das Gas zu verflüssigen, und mindestens einen Tauscher (5) zum Kühlen des Gases und mindestens eine Entspannungsturbine (6), die auf einer drehenden Welle montiert ist, die durch mindestens ein Lager (7) vom Typ statisches Gaslager gestützt wird, umfassen, wobei der Kühlkreis (2) eine Druckgas-Einspritzleitung (8) umfasst, die ein stromaufwärtiges Ende hat, das dazu bestimmt ist, von der Quelle geliefertes Druckgas aufzunehmen, und ein stromabwärtiges Ende, das mit dem Lager (7) verbunden ist, um das Stützen der drehenden Achse zu gewährleisten, wobei die Anlage (1) eine Rückgewinnungsleitung (9) für das Gas umfasst, das in dem Lager (7) verwendet worden ist, wobei die Rückgewinnungsleitung (9) ein stromaufwärtiges Ende, das mit dem Lager (7) verbunden ist, und ein stromabwärtiges Ende umfasst, wobei das stromabwärtige Ende der Rückgewinnungsleitung (9) für das Gas mit dem Kühlkreis (2) zwischen dessen stromaufwärtigen und stromabwärtigen Enden verbunden ist, um darin mindestens einen Teil des Gases zu recyceln, das zum Stützen der drehenden Achse des Lagers (7) gedient hat, im Hinblick auf seine Verflüssigung, **dadurch gekennzeichnet, dass** die Rückgewinnungsleitung (9) ein stromabwärtiges Ende umfasst, das auf Ebene des Auslasses der mindestens einen Entspannungsturbine (6) angeschlossen ist.

2. Anlage nach Anspruch 1, **dadurch gekennzeichnet, dass** die Rückgewinnungsleitung (9) mindestens ein Ventil (11) zur Regelung des Gasstroms umfasst, insbesondere ein Entspannungsventil.

3. Anlage nach Anspruch 1 oder 2, **dadurch gekennzeichnet, dass** die Rückgewinnungsleitung (9) einen Abschnitt im Wärmeaustausch mit mindestens einem Kühlwärmetauscher (5, 10) umfasst.

4. Anlage nach einem der Ansprüche 1 bis 3, **dadurch gekennzeichnet, dass** die Rückgewinnungsleitung (9) zwischen ihren stromaufwärtigen und stromabwärtigen Enden im Wärmeaustausch mit dem mindestens einen Tauscher (5) zum Kühlen des Gases des Kühlkreises (2) steht.

5. Anlage nach einem der Ansprüche 1 bis 4, **dadurch gekennzeichnet, dass** die Rückgewinnungsleitung (9) im Wärmeaustausch mit dem oder den Tauschern (5) zum Kühlen des Gases des Kühlkreises (2) über einen oder mehrere Durchlässe in dem oder den Tauschern (5) steht, die verschieden von den für den Kühlkreis (2) vorgesehenen Durchlässen sind, das heißt, dass das Gas des Kühlkreises (2) und das in der Rückgewinnungsleitung (9) zirkulierende Gas parallel und separat gekühlt werden, bevor sie stromabwärts gemischt werden.

6. Anlage nach einem der Ansprüche 1 bis 5, **dadurch gekennzeichnet, dass** die mindestens eine Entspannungsturbine (6) an einem ersten Ende der drehenden Achse montiert ist, wobei das andere Ende der drehenden Achse einen Kompressor (13) trägt, der in einem geschlossenen Kreis (14) für ein Arbeitsgas gelegen ist, wobei der Kreis (14) einen Abschnitt im Wärmeaustausch mit einem Tauscher (15) zum Kühlen umfasst, um das von dem Kompressor (13) verdichtete Gas zu kühlen.

7. Anlage nach einem der Ansprüche 1 bis 6, **dadurch gekennzeichnet, dass** das stromabwärtige Ende der Einspritzleitung (8) mindestens eine Düse (16) zum Einspritzen des Gases in das Lager umfasst, die dazu ausgestaltet ist, eine kontrollierte Druckabsenkung des Gases in dem Lager (7) zu gewährleisten und einen Druck des Gases im Auslass des Lagers oberhalb eines bestimmten Schwellenwerts zu halten.

8. Verfahren zur Verflüssigung eines Gasstroms wie Wasserstoff in einer Anlage (1) zur Verflüssigung, die einen Kühlkreis (2) umfasst, der mit einem Ende versehen ist, das mit einer Quelle (3) für zu verflüssigendes Druckgas verbunden ist, und mit einem stromabwärtigen Ende (4), das dazu bestimmt ist, mit einem verflüssigtes Gas verbrauchenden Organ verbunden zu werden, wobei die Anlage (1) zwischen den stromaufwärtigen und stromabwärtigen (4) Enden eine Anordnung von Organen (5, 6) umfasst, die dazu bestimmt sind, das Gas zu verflüssigen, und mindestens einen Tauscher (5) zum Kühlen des Gases und mindestens eine Entspannungsturbine (6), die auf einer drehenden Welle montiert ist, die durch mindestens ein statisches Gaslager (7) gestützt wird, umfassen, wobei der Kreis (2) der Anlage (1) eine Druckgas-Einspritzleitung (8) umfasst, die ein stromaufwärtiges Ende hat, das dazu bestimmt ist, von der Quelle geliefertes Druckgas aufzunehmen, und ein stromabwärtiges Ende, das mit dem statischen Gaslager (7) verbunden ist, um das Stützen der drehenden Achse zu gewährleisten, wobei die Anlage (1) eine Rückgewinnungsleitung (9) für das Gas umfasst, das in dem Lager (7) verwendet worden ist, die ein stromaufwärtiges Ende, das mit dem Lager (7) verbunden ist, und ein stromabwärtiges Ende umfasst, wobei das Verfahren einen Schritt des Wiedereinspritzens, in den Kühlkreis (2), mindestens eines Teils des Gases, das zum Stützen der drehenden Achse des Lagers (7) gedient hat, im Hinblick auf seine Verflüssigung umfasst, **dadurch gekennzeichnet, dass** die Rückgewinnungsleitung (9) ein stromabwärtiges Ende umfasst, das auf Ebene des Auslasses der mindestens einen Entspannungsturbine (6) angeschlossen ist.

9. Verfahren nach Anspruch 8, **dadurch gekennzeichnet, dass** das zu verflüssigende Gas mindestens eines unter Wasserstoff, Helium, Neon, Stickstoff, Sauerstoff und Argon ist.

10. Verfahren nach Anspruch 8 oder 9, **dadurch gekennzeichnet, dass** der Druck des aus der Quelle kommenden zu verflüssigenden Gases auf Ebene des stromaufwärtigen Endes des Kühlkreises (2) einen Druck zwischen 5 und 80 bar abs hat und dass der Druck des zurückgewonnenen Gases auf Ebene des stromaufwärtigen Endes der Rückgewinnungsleitung (9) einen Druck zwischen 1,5 bar abs und 20 bar abs hat.

## Claims

1. Plant for liquefying a flow of gas, such as hydrogen, the plant (1) comprising a cooling circuit (2) provided with an upstream end intended to be connected to a source (3) of pressurized gas to be liquefied and a downstream end (4) intended to be connected to a component for using the liquefied gas, the plant (1) comprising, between the upstream and downstream ends (4), a set of components (5, 6) intended to liquefy said gas and comprising at least one exchanger (5) for cooling the gas, and at least one expansion turbine (6) mounted on a rotary shaft supported by at least one bearing (7) of the gas-static type, the cooling circuit (2) comprising a pressurized gas injection pipe (8) having an upstream end intended to receive pressurized gas supplied by the source and a downstream end connected to the bearing (7) to support the rotary shaft, the plant (1) comprising a pipe (9) for recovering the gas that has been used in the bearing (7), the recovery pipe (9) comprising an upstream end connected to the bearing (7) and a downstream end, the downstream end of the gas recovery pipe (9) being connected to the cooling circuit (2) between its upstream and downstream ends to recycle there at least some of the gas that has been used to support the rotary shaft of the bearing (7) in order to liquefy said gas, **characterized in that** the recovery pipe (9) comprises a downstream end connected to the outlet of the at least one expansion turbine (6).

2. Plant according to Claim 1, **characterized in that** the recovery pipe (9) comprises at least one gas flow control valve (11), in particular an expansion valve.

3. Plant according to Claim 1 or 2, **characterized in that** the recovery pipe (9) comprises a portion exchanging heat with at least one cooling heat exchanger (5, 10).

4. Plant according to any one of Claims 1 to 3, **characterized in that**, between its upstream and downstream ends, the recovery pipe (9) exchanges heat with the at least one gas cooling exchanger (5) of the cooling circuit (2).

5. Plant according to any one of Claims 1 to 4, **characterized in that** the recovery pipe (9) exchanges heat with the one or more gas cooling exchangers (5) of the cooling circuit (2) via one or more passages in the one or more exchangers (5) that are separate from the passages provided for the cooling circuit (2), i.e. the gas of the cooling circuit (2) and the gas circulating in the recovery pipe (9) are cooled in parallel and separately before being mixed downstream.

6. Plant according to any one of Claims 1 to 5, **characterized in that** the at least one expansion turbine (6) is mounted on a first end of the rotary shaft, with the other end of the rotary shaft bearing a compressor (13) located in a loop circuit (14) for a working gas, said circuit (14) comprising a portion exchanging heat with a cooling exchanger (15) for cooling the gas compressed by the compressor (13).

7. Plant according to any one of Claims 1 to 6, **characterized in that** the downstream end of the injection pipe (8) comprises at least one nozzle (16) for injecting gas into the bearing that is configured to ensure a controlled reduction in the pressure of said gas in the bearing (7) and to keep a pressure of said gas output from the bearing above a determined threshold.

8. Method for liquefying a flow of gas, such as hydrogen, in a liquefying plant (1) comprising a cooling circuit (2) provided with an end connected to a source (3) of pressurized gas to be liquefied and a downstream end (4) intended to be connected to a component for using the liquefied gas, the plant (1) comprising, between the upstream and downstream ends (4), a set of components (5, 6) intended to liquefy said gas and comprising at least one exchanger (5) for cooling the gas, and at least one expansion turbine (6) mounted on a rotary shaft supported by at least one gas-static bearing (7), the circuit (2) of the plant (1) comprising a pressurized gas injection pipe (8) having an upstream end intended to receive pressurized gas supplied by the source and a downstream end connected to the gas-static bearing (7) to support the rotary shaft, the plant (1) comprising a pipe (9) for recovering the gas that has been used in the bearing (7) comprising an upstream end connected to the bearing (7) and a downstream end, the method comprising a step of reinjecting, into the cooling circuit (2), at least some of the gas that has been used to support the rotary shaft of the bearing (7) in order to liquefy said gas, **characterized in that** the recovery pipe (9) comprises a downstream end connected to the outlet of the at least one expansion turbine (6).

9. Method according to Claim 8, **characterized in that** the gas to be liquefied is at least one of the following: hydrogen, helium, neon, nitrogen, oxygen, argon.

10. Method according to Claim 8 or 9, **characterized in that** the pressure of the gas to be liquefied coming from the source at the upstream end of the cooling circuit (2) ranges between 5 and 80 bar abs, and **in that** the pressure of the gas recovered at the upstream end of the recovery pipe (9) ranges between 1.5 bar abs and 20 bar abs.
